# EUROPÄISCHE PATENTSCHRIFT

(11) **EP 3 994 359 B1**
(45) Veröffentlichungstag und Bekanntmachung des Hinweises auf die Patenterteilung: **06.11.2024**
(21) Anmeldenummer: 20743594.2
(22) Anmeldetag: 01.07.2020
(51) Int. Cl.: F04D 29/02

(54) **PUMPENANORDNUNG**
PUMP DEVICE
DISPOSITIF DE POMPE

(30) Priorität: 01.07.2019 DE 102019004538; 10.12.2019 DE 102019008561; 30.06.2020 DE 102020003929; 30.06.2020 DE 102020003928
(43) Veröffentlichungstag der Anmeldung: 11.05.2022
(73) Patentinhaber: KSB SE & Co. KGaA, 67227 Frankenthal (DE)
(72) Erfinder: BUTHMANN, Lukas, 67227 Frankenthal (DE)
(86) Internationale Anmeldenummer: PCT/EP2020/068519
(87) Internationale Veröffentlichungsnummer: WO 2021/001422

(56) Entgegenhaltungen:
- EP-A1- 2 713 058
- WO-A1-2016/116428
- WO-A1-2019/023095
- CN-U- 203 867 983
- FR-A1- 2 008 305
- FR-A1- 2 288 891
- JP-A- 2015 143 476
- US-A- 3 936 220
- US-A1- 2005 013 689
- US-A1- 2006 171 801
- US-A1- 2007 000 648
- US-A1- 2016 245 291

## Beschreibung

Die Erfindung betrifft eine Pumpenanordnung, insbesondere eine Kreiselpumpenanordnung, gemäß des Oberbegriffs des Anspruchs 1.

Derartige Pumpenanordnungen finden in vielen Bereichen ihre Anwendung, z.B in der Gebäudetechnik, bei der Förderung von Wasser oder Abwasser, in der Energietechnik oder oftmals auch in Industrieanlagen, insbesondere in der Chemie und Petrochemie. In der Chemie oder Petrochemie werden häufig Medien gepumpt bzw. gefördert, welche nur bei einer bestimmten Temperatur förderbar bzw. pumpbar sind.

Ein derartiges Medium ist beispielsweise Schwefel. Sinkt oder steigt die Temperatur während des Pumpprozesses an einigen Stellen in der Pumpe zu stark, kann das Medium auskristallisieren und somit einen Trockenlauf der Pumpe verursachen. Weiterhin kann ein derartiges Auskristallisieren auch das Fördermedium verunreinigen.

Ein weiteres Beispiel ist die Förderung von Schweröl oder Bitumen. Zur Förderung dieser Medien müssen die eingesetzten Pumpen beispielsweise bei sehr tiefen Temperaturen vorgeheizt werden, um ein Trockenlaufen der Pumpe zu vermeiden, da Schweröl und Bitumen ohne eine vorherige Erwärmung zu viskos sind, um pumpbar zu sein.

Unter anderem bei Prozesspumpen ist eine genaue Regulierung der Temperatur von entscheidender Bedeutung, da schwankende Temperaturen einen gesamten Anlagenprozess stören können.

Bekannte beheizbare Spiralgehäuse haben den Nachteil, dass sie aus mehreren Einzelteilen bestehen, welche meist durch Schweißen miteinander verbunden werden. An den Schweißstellen kann es zu Leckagen kommen, wenn diese nicht korrekt verschweißt sind, was die Funktion der Pumpe wesentlich verschlechtert.

Zudem gestaltet es sich bei derartigen Schweißkonstruktionen schwierig, das komplette Gehäuse inklusive der Flansche gleichmäßig zu temperieren.

Bei herkömmlichen Pumpen können die an den Stutzen bzw. Einlass- und Auslassöffnungen anliegenden Kräfte und Momente das Gehäuse verformen und zu einem Anlaufen des Laufrads an angrenzende Bauteile der Pumpe führen. Deshalb muss bei Pumpen generell auch auf eine ausreichend dicke Wandstärke geachtet werden, damit das Gehäuse im Betrieb den unterschiedlichen Drücken standhalten kann. Somit sind leichtgewichtige Pumpen kaum herstellbar.

Aus den Schriften JP 2015 143476 A, CN 203867983 U, EP 2 713 058 A1, US 2016/0245291 A1 und FR 2 288 891 A1 sind Kreiselpumpen bekannt, an deren Gehäuse jeweils Verstärkungsrippen vorgesehen sind. Aus der US 3 936 220 A ist eine Pumpe für heiße und kalte Flüssigkeiten bekannt, die mittels durch sie gepumpte Flüssigkeiten auf einer gewünschten Temperatur gehalten wird.

Der vorliegenden Erfindung liegt die Aufgabe zugrunde, die Mängel der aus dem Stand der Technik bekannten Vorrichtungen abzumildern oder gar ganz zu beheben. Konkret ist es eine Aufgabe der vorliegenden Erfindung eine Pumpenanordnung bereitzustellen, die eine besonders geringe Masse aufweist, oder mittels dessen die Förderung von Medien bei optimaler Fördertemperatur gewährleistet ist.

Diese Aufgabe wird durch eine Pumpenanordnung mit den Merkmalen des Anspruchs 1 gelöst.

Damit das Hydraulikgehäuse mit einer relativ dünnen Außenwandung dem Druck im Inneren sicher standhalten kann, weist vorteilsweise das Hydraulikgehäuse eine Stützstruktur auf. Die Stützstruktur nimmt die an Saugstutzen und Druckstutzen auftretenden Kräfte und Momente auf und leitet diese ab. Zudem wird eine Versteifung des Hydraulikgehäuse bei minimalen Eigengewicht erzielt, wodurch das Risiko des Anschleifens des Laufrads an einem üblicherweise im Hydraulikgehäuse untergebrachten Spaltring oder an einem Teil des Hydraulikgehäuses minimiert. Die an der Außenwandung durch Materialanhäufung ausgebildete Stützstruktur stützt und entlastet somit relativ dünne Außenwandung des Hydraulikgehäuses.

Dabei ist es besonders vorteilhaft, wenn die Stützstruktur definierte Bauelemente des Hydraulikgehäuses miteinander verbindet, insbesondere Gehäusefüße, Saugstutzen, Druckstutzen und Verbindungsstellen, an welche weitere Bauteile der Pumpenanordnung befestigbar sind.

Die erfindungsgemäße Ausgestaltung sieht vor, dass die Stützstruktur im Wesentlichen horizontal, vertikal und diagonal verlaufende Materialanhäufungen aufweist, die Knoten- oder Kreuzungspunkte bilden.

Als besonders vorteilhaft hat sich herausgestellt, dass freie Enden der Stützstruktur Sacklöcher zur Aufnahme von geeigneten Befestigungsmitteln, insbesondere Schrauben oder Gewindebolzen, aufweisen. Dabei sind vorteilhafterweise Innengewinde vorgesehen, in die die Befestigungsmittel einschraubbar sind.

Erfindungsgemäß weist das Hydraulikgehäuse eine die Strömungskammer begrenzende Innenwandung und eine von der Innenwandung beabstandete Außenwandung auf, wobei Innenwandung und Außenwandung eine Temperierkammer bilden.

Um eine gleichmäßige Temperatur an der Innenwandung des Hydraulikgehäuses zu erreichen, erstreckt sich die Temperierkammer zwischen Innenwandung und Außenwandung und im Wesentlichen über den die Strömungskammer begrenzenden Teil der Innenwandung.

Dabei hat es sich als besonders vorteilhaft erwiesen, wenn in der Temperierkammer wenigstens ein im Wesentlichen konzentrisch zur Drehachse angeordneter kreisartig verlaufender Kanal ausgebildet ist.

Als besonders vorteilhaft hat sich erwiesen, wenn in der Temperierkammer eine Vielzahl von Streben vorgesehen sind, welche die Innenwandung mit der Außenwandung verbinden und im Wesentlichen konzentrisch zur Drehachse angeordnete kreisartig verlaufende Kanäle bilden. Dadurch ist sichergestellt, dass selbst bei Verstopfung eines Kanals oder sogar von mehreren Kanälen das Hydraulikgehäuse weiter beheizt oder gekühlt werden kann.

Damit alle Kanäle gleichzeitig durchströmt werden können, sind in der Temperierkammer eine erste Sammelkammer und eine zweite Sammelkammer ausgebildet, die beginnend von einem Bereich nahe des Saugstutzens eine im Wesentlichen radiale Ausdehnung, insbesondere in Richtung Druckstutzen, aufweisen.

Dass in einem sich radial erstreckenden Bereich, der unterhalb des Saugstutzens liegt, eine dritte Sammelkammer ausgebildet ist vereinfacht im Bedarfsfall ein vollständiges entleeren der Kanäle.

Damit das Kühl- oder Heizmedium bedienungsfreundlich der Temperierkammer zugeführt bzw. abgeführt werden kann, ist erfindungsgemäß am Druckstutzen eine erste Anschlussvorrichtung für eine Versorgungsleitung vorgesehen, über die das Kühl- oder Heizmedium zum Temperieren des Hydraulikgehäuses in die Temperierkammer einströmt. Desweiteren ist am Druckstutzen eine zweite Anschlussvorrichtung zum Anschließen einer Versorgungsleitung vorgesehen, über die das Kühl- oder Heizmedium aus der Temperierkammer wieder ausströmt.

Um bei Bedarf eine vollständige Entleerung der Temperierkammer auf einfache Art und Weise sicherzustellen, weist das Hydraulikgehäuse eine mit der dritten Sammelkammer verbundene dritte Anschlussvorrichtung zum Anschließen einer weiteren Leitung auf.

In vorteilhafterweise weist der wenigstens eine Kanal bzw. die Kanäle eine definierte Strukturierung auf, die zur Maximierung von Turbulenzen in dem Kühl- oder Heizmedium und somit zur Maximierung des Wärmeaustauschs dient.

Eine weitere Aufgabe der vorliegenden Erfindung besteht darin, ein Verfahren zur Herstellung eines Hydraulikgehäuses für eine Pumpenanordnung als einstückiges Bauteil mittels 3D-Drucks, insbesondere metallischen 3D-Drucks, Selektiven Laser-Schmelzens (SLM), oder mittels Feingusses, bereitzustellen.

Weitere Vorteile, Merkmale und Effekte der vorliegenden Erfindung ergeben sich aus den nachstehenden Figuren. Hierbei zeigen
- Fig. 1: einen Längsschnitt durch eine Pumpenanordnung mit einem erfindungsgemäßen Hydraulikgehäuse,
- Fig. 2: einen Längsschnitt durch das erfindungsgemäße Hydraulikgehäuse in vergrößerter Darstellung,
- Fig. 3: eine perspektivische Darstellung des Hydraulikgehäuses gemäß Fig. 2,
- Fig. 4: einen Längsschnitt durch eine weitere Ausführungsform des Hydraulikgehäuses,
- Fig. 5: eine schematische Darstellung des Hydraulikgehäuses und
- Fig. 6: einen Längsschnitt durch eine weitere Ausführungsform des Hydraulikgehäuses mit relativ dünner Außenwandung. Die Ausführungsform von Fig. 6 entspricht der beanspruchten Erfindung aber nicht.

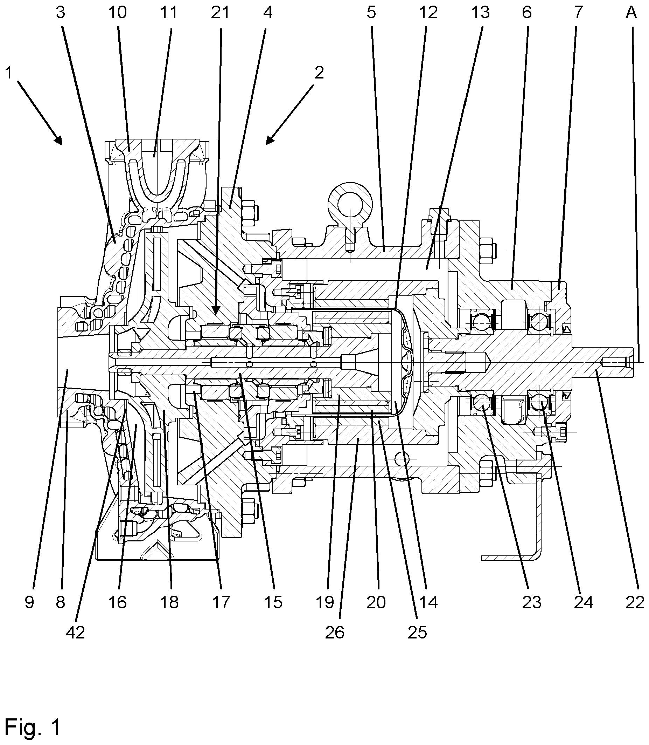

Die Fig. 1 zeigt eine Pumpenanordnung 1 in Form einer Magnetkupplungspumpenanordnung. Die Pumpenanordnung 1 weist ein mehrteiliges Pumpengehäuse 2 einer Kreiselpumpe auf, das ein als Hydraulikgehäuse 3 ausgebildetes Gehäuseteil, einen Gehäusedeckel 4, eine Lagerträgerlaterne 5, einen Lagerträger 6 und einen Lagerdeckel 7 umfasst.

Das Hydraulikgehäuse 3 weist an einem Saugstutzen 8 eine Einlassöffnung 9 zum Ansaugen eines Fördermediums und an einem Druckstutzen 10 eine Auslassöffnung 11 zum Ausstoßen des Fördermediums auf. Der Gehäusedeckel 4 ist an der der Einlassöffnung 9 gegenüberliegenden Seite des Hydraulikgehäuses 3 angeordnet. An der dem Hydraulikgehäuse 3 abgewandten Seite des Gehäusedeckels 4 ist die Lagerträgerlaterne 5 befestigt. Der Lagerträger 6 ist an der dem Gehäusedeckel 4 gegenüberliegenden Seite der Lagerträgerlaterne 5 angebracht. Der Lagerdeckel 7 ist wiederum an der der Lagerträgerlaterne 5 abgewandten Seite des Lagerträgers 6 befestigt.

Ein Spalttopf 12 ist an der dem Hydraulikgehäuse 3 abgewandten Seite des Gehäusedeckels 4 befestigt und erstreckt sich zumindest teilweise durch einen vom Pumpengehäuse 2, insbesondere vom Gehäusedeckel 4, von der Lagerträgerlaterne 5 und von dem Lagerträger 6 begrenzten Innenraum 13. Der Spalttopf 12 dichtet eine von ihm umschlossene Kammer 14 hermetisch gegenüber dem Innenraum 13 ab.

Eine um eine Drehachse A drehbare Laufradwelle 15 erstreckt sich von einer mittels des Hydraulikgehäuses 3 und des Gehäusedeckels 4 begrenzten Strömungskammer 16 durch eine in dem Gehäusedeckel 4 vorgesehene Öffnung 17 in die Kammer 14.

An einem innerhalb der Strömungskammer 16 liegenden Wellenende der Laufradwelle 15 ist ein Laufrad 18 befestigt, am gegenüberliegenden Wellenende ist ein innerhalb der Kammer 14 angeordneter Innenrotor 19 angeordnet. Der Innenrotor 19 ist mit mehreren Magneten 20 bestückt, die an der dem Spalttopf 12 zugewandten Seite des Innenrotors 19 angeordnet sind.

Zwischen Laufrad 18 und Innenrotor 19 ist eine mit der um die Drehachse A drehbar antreibbaren Laufradwelle 15 in Wirkverbindung stehende Lageranordnung 21 angeordnet.

Ein nicht dargestellter Antriebsmotor, vorzugsweise ein Elektromotor, treibt eine Antriebswelle 22 an. Die um die Drehachse A drehbar antreibbare Antriebswelle 22 ist im Wesentlichen koaxial mit der Laufradwelle 15 angeordnet. Die Antriebswelle 22 erstreckt sich durch den Lagerdeckel 7 sowie den Lagerträger 6 und ist in zwei in dem Lagerträger 6 untergebrachten Kugellagern 23, 24 gelagert. Am freien Ende der Antriebswelle 22 ist ein mehrere Magnete 25 tragender Außenrotor 26 angeordnet. Die Magnete 25 sind an der dem Spalttopf 12 zugewandten Seite des Außenrotors 26 angeordnet. Der Außenrotor 26 erstreckt sich zumindest teilweise über den Spalttopf 12 und wirkt mit dem Innenrotor 19 zusammen, derart, dass der rotierende Außenrotor 26 mittels magnetischer Kräfte den Innenrotor 19 und somit die Laufradwelle 15 und das Laufrad 18 ebenfalls in eine Rotationsbewegung versetzt.

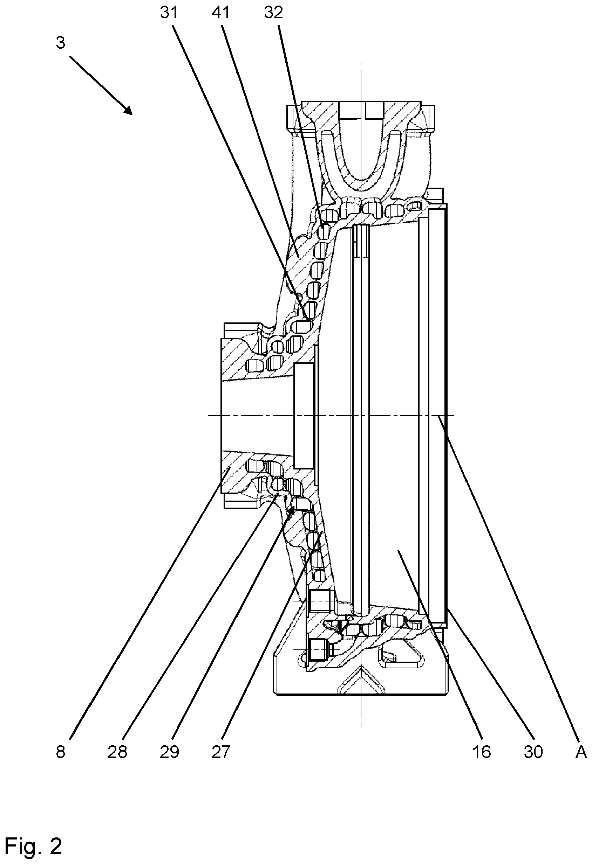

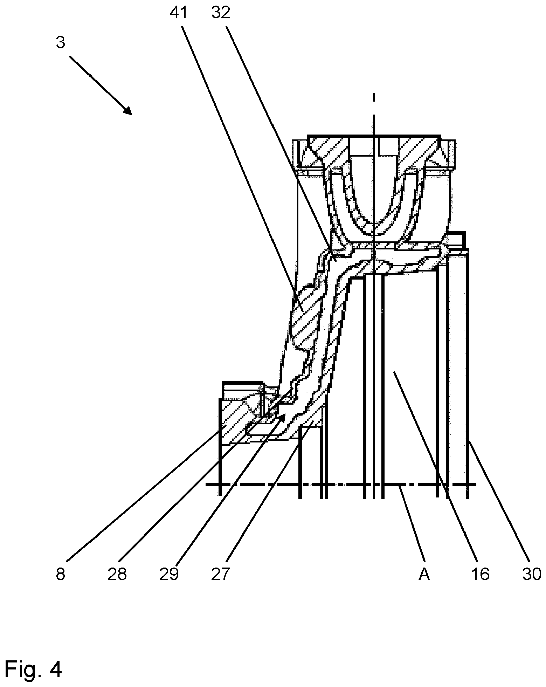

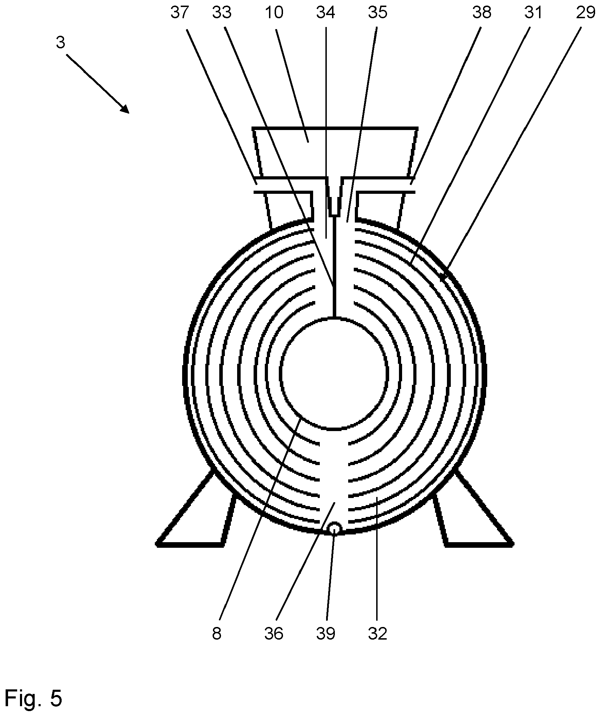

Die Fig. 2, 3 und 4 zeigen beispielhafte Ausführungen des Hydraulikgehäuses 3 im Detail. Das Hydraulikgehäuse 3 weist eine Innenwandung 27 und eine von der Innenwandung 27 beabstandete Außenwandung 28 auf. Innenwandung 27 und Außenwandung 28 bilden bzw. begrenzen eine Temperierkammer 29. Die Temperierkammer 29 erstreckt sich zwischen Innenwandung 27 und Außenwandung 28 und im Wesentlichen über den die Strömungskammer 16 begrenzenden Teil der Innenwandung 27. Das heißt, von einer Fläche 30 des Hydraulikgehäuses 3, an welcher der Gehäusedeckel 4 anliegt, über das ganze Hydrauligehäuse 3 bis zum Saugstutzen 8. Bei dem gezeigten Ausführungsbeispiel sind in der Temperierkammer 29 eine Vielzahl von Streben 31 vorgesehen, welche die Innenwandung 27 mit der Außenwandung 28 verbinden. Dadurch entstehen, wie schematisch in Fig. 5 dargestellt, kreisartig verlaufende Kanäle 32, die im Wesentlichen konzentrisch zur Drehachse A angeordnet sind. Wird auf die Streben verzichtet, entsteht ein kreisartig verlaufender Kanal 32, der im Schnitt, wie er in Fig. 4 dargestellt ist, einen im Wesentlichen S-förmigen Verlauf aufweist.

Wie in der Fig. 5 gezeigt, sind in einem Bereich, der sich vom Saugstutzen 8 zum Druckstutzen 10 erstreckt, die Streben 31 und die Kanäle 32 nicht durchgängig, d.h. sie sind unterbrochen. Ein in der Fig. 5 dargestellter, sich vom Druckstutzen 10 zum Saugstutzen 8 erstreckender Steg, der Innenwandung 27 und Außenwandung 28 verbindet, bildet eine Trennwand 33 in der Temperierkammer 29. Die Streben 31 berühren die Trennwand 33 dabei nicht, sodass, wie in Fig. 5 schematisch gezeigt, in der Temperierkammer 29 eine erste Sammelkammer 34 und eine zweite Sammelkammer 35 gebildet werden. Erste Sammelkammer 34 und zweite Sammelkammer 35 weisen beginnend von einem Bereich nahe des Saugstutzens 8 eine im Wesentlichen radiale Ausdehnung, insbesondere in Richtung Druckstutzen 10 auf. In einem sich radial erstreckenden Bereich, der bei dem stehenden Hydraulikgehäuse 3 unterhalb des Saugstutzens 8 liegt, sind die Streben 31 ebenfalls nicht durchgängig ausgebildet. Dadurch wird eine dritte, in der Fig. 5 schematisch gezeigte Sammelkammer 36 gebildet.

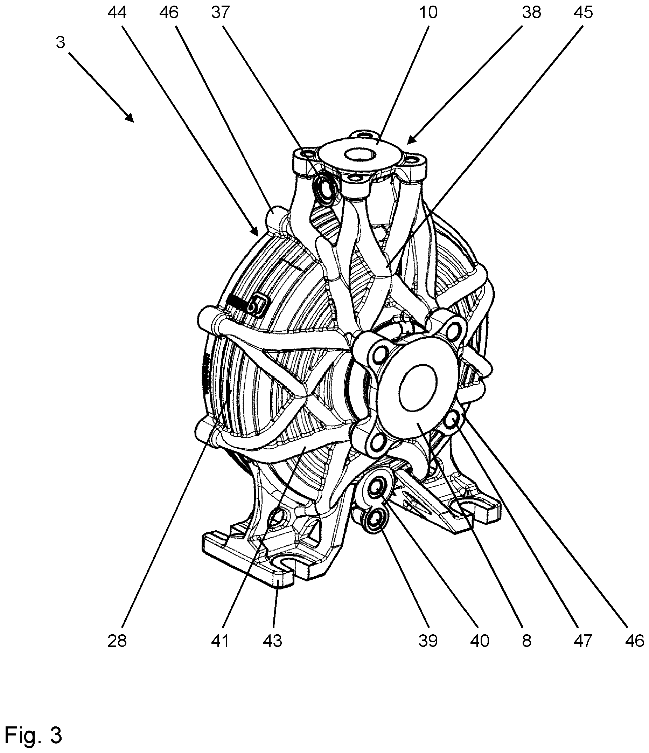

Wie in der Fig. 3 gezeigt, ist am Druckstutzen 10 eine erste Anschlussvorrichtung 37 vorgesehen, über die ein Kühl- oder Heizmedium zum Temperieren, d. h. zum Kühlen und/oder Beheizen des Hydraulikgehäuses 3 in die Temperierkammer 29 einströmen kann. Eine zweite Anschlussvorrichtung, auf die das Bezugszeichen 38 verweist, über die das Kühl- oder Heizmedium aus der Temperierkammer 29 wieder ausströmen kann, ist der ersten Anschlussvorrichtung 37 gegenüberliegend angeordnet. Die Anordnung der zweiten Anschlussvorrichtung 38 ist am besten in der Fig. 5 erkennbar.

Das Hydraulikgehäuse 3 weist eine mit der dritten Sammelkammer 36 verbundene dritte Anschlussvorrichtung 39 auf, die für die vollständige Entleerung der Temperierkammer 29 vorgesehen ist. Die Anschlussvorrichtung 39 ist derart angeordnet, dass die Entleerung der Temperierkammer 29 im Wesentlichen in axialer Richtung erfolgt. Die Anschlussvorrichtung 39 ist zum vollständigen Ablassen des enthaltenen Kühl- bzw.Heizmediums am tiefsten Punkt der Temperierkammer 29 ausgebildet.

Der Kanal 32 bzw. die Kanäle 32 weisen eine definierte Strukturierung auf, die zur Maximierung von Turbulenzen in dem Kühl- oder Heizmedium und somit zur Maximierung des Wärmeaustauschs dienen. Bei dem gezeigten Ausführungsbeispiel gibt es Kanäle 32, die beispielsweise kreisrund, oval, im Wesentlichen L- oder V-örmig ausgebildet sind oder Vertiefungen aufweisen. Die Streben 31 können z.B. ein flügelartiges Profil aufweisen. Der Kanal 32 bzw. die Kanäle 32 sowie die Streben 31 können auch bionischen Strukturen, beispielsweise ein haifischhautähnliche Struktur aufweisen. Bei der beispielhaft gezeigten Ausführungsform weist die Außenwandung 28 an der zur Au-ßenumgebung gerichteten Seite eine definierte Oberflächenstrukturierung, insbesondere eine wellenartig ausgebildete Oberflächenstrukturierung, auf.

Wie aus den Fig. 2 und 3 ersichtlich, weist das Hydraulikgehäuse 3 eine vierte Anschlussvorrichtung 40 auf, die für die vollständige Entleerung der Strömungskammer 16 bestimmt ist. Die Anschlussvorrichtung 40 ist über der Anschlussvorrichtung 39 angeordnet. Die Anschlussvorrichtung 40 ist derart angeordnet, dass die Entleerung der Strömungskammer 16 im Wesentlichen in axialer Richtung erfolgt.

Zum Kühlen oder Beheizen des Hydraulikgehäuses 3 strömt das Kühl- oder Heizmedium über die erste Anschlussvorrichtung 37 in die erste Sammelkammer 34 der Temperierkammer 29 und von dort in die fluidtechnich direkt miteinander in Verbindung stehenden einzelnen Kanäle 32 bis schließlich in die zweite Sammelkammer 35 und von dort über die zweite Anschlussvorrichtung 38 aus der Temperierkammer 29. Dabei wird eine gleichmäßige Temperaturverteilung über das Hydraulikgehäuse 3 erreicht.

Es versteht sich, dass das Kühl- oder Heizmedium auch über die zweite Anschlussvorrichtung 38 der Temperierkammer 29 zugeführt werden kann und über die erste Anschlussvorrichtung 37 aus der Temperierkammer 29 ausströmt.

Wie in den Fig. 2 bis 4 gezeigt, weist das Hydraulikgehäuse 3 zudem eine Stützstruktur 41 auf, welches die an Saugstutzen 8 und Druckstutzen 10 auftretenden Kräfte und Momente aufnimmt und ableitet. Zudem wird dadurch eine Versteifung des Hydraulikgehäuse 3 erzielt, welche das Risiko des Anschleifens des Laufrads 18 an einem in der Fig. 1 gezeigten Spaltring 42 oder an einem Teil des Hydraulikgehäuses 3 minimiert. Die an der Außenwandung 28 durch Materialanhäufung ausgebildete Stützstruktur 41 stützt und entlastet somit sowohl die relativ dünne Innenwandung 27 als auch die relativ dünne Außenwandung des Hydraulikgehäuses 3. Die Stützstruktur 41 verbindet definierte Bauelemente des Hydraulikgehäuses miteinander, insbesondere Gehäusefüße 43, Saugstutzen 8, Druckstutzen 10 und Verbindungsstellen 44, an welche weitere Bauteile der Pumpenanordnung befestigbar sind, beispielsweise der Gehäusedeckel 4.

Die Stützsruktur 41 ist kraftflussoptimiert bzw. topologieoptimiert ausgeführt. Die Stützstruktur 41 weist im Wesentlichen horizontal, vertikal und diagonal verlaufende Materialanhäufungen auf, die Knoten- oder Kreuzungspunkte 45 bilden. Freie Enden 46 der Stützstruktur 41 weisen Sacklöcher 47 auf, die zur Aufnahme von nicht dargestellten Befestigungsmitteln, beispielsweise Schrauben oder Gewindebolzen, vorgesehen sind.

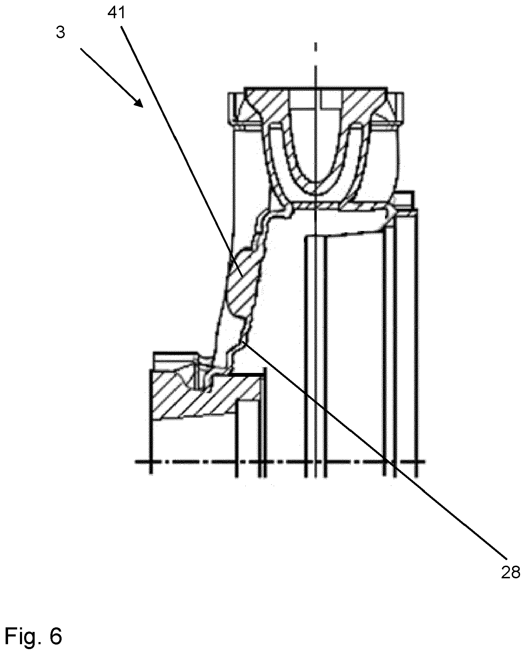

Die Fig. 6 zeigt ein nicht erfindungsgemäßes Hydraulikgehäuse, das eine im Vergleich zu üblichen Pumpen relativ dünne Außenwandung 28, die durch eine mittels Materialanhäufung ausgebildete Stützstruktur 41 gestützt und entlastet wid.

Insbesondere die Fig. 1 zeigt eine Pumpenanordnung 1 in Form einer Magnetkupplungspumpenanordnung. Es ist jedoch ersichtlich, dass das erfindungsgemäße Hydraulikgehäuse 3 bei anderen Pumpenanordnungen, beispielsweise Spaltrohrmotorpumpen, Inlinepumpen beliebige Pumpen ohne Magnetkupplung, anwendbar ist.

Das vorstehend beschriebene Hydraulikgehäuse 3 für eine Pumpenanordnung 1 wird vorteilhafterweise als einstückiges Bauteil mittels 3D-Drucks, insbesondere metallischen 3D-Drucks, Selektiven Laser-Schmelzens (SLM), oder mittels Feingusses hergestellt. Bei bestimmten Gehäuseformen ist auch ein Schwerkraftgießverfahren anwendbar.

## Patentansprüche

1. Pumpenanordnung (1), insbesondere eine Kreiselpumpenanordnung, mit
einem Hydraulikgehäuse (3),
einem am Hydraulikgehäuse (3) ausgebildeten Saugstutzen (8),
einem am Hydraulikgehäuse (3) ausgebildeten Druckstutzen (10),
einer durch das Hydraulikgehäuse (3) zumindest teilweise begrenzten Strömungskammer (16),
einem in der Strömungskammer (16) angeordneten, über eine Laufradwelle (15) um eine Drehachse (A) antreibaren Laufrad (18),
wobei
das Hydraulikgehäuse (3) eine die Strömungskammer (16) begrenzende Innenwandung (27) und eine von der Innenwandung (27) beabstandete Außenwandung (28) aufweist, wobei Innenwandung (27) und Außenwandung (28) eine Temperierkammer (29) bilden,
eine erste Anschlussvorrichtung (37) vorgesehen ist, über die ein Kühl- oder Heizmedium zum Temperieren des Hydraulikgehäuses (3) in die Temperierkammer (29) einströmen kann,
eine zweite Anschlussvorrichtung (38) vorgesehen ist, über die das Kühl- oder Heizmedium aus der Temperierkammer (29) wieder ausströmen kann,
das Hydraulikgehäuse (3) an der Außenseite der Außenwandung (28) eine Stützstruktur (41) aufweist und
die Stützstruktur (41) im Wesentlichen horizontal, vertikal und diagonal verlaufende längliche Materialanhäufungen aufweist,
**dadurch gekennzeichnet,**
**dass** die längliche Materialanhäufungen Knoten- oder Kreuzungspunkte (45) bilden, und
**dass** die erste Anschlussvorrichtung am Druckstutzen (10) vorgesehen ist.

2. Pumpenanordnung (1) nach Anspruch 1, **dadurch gekennzeichnet, dass** die Stützstruktur (41) definierte Bauelemente des Hydraulikgehäuses (3) miteinander verbindet, insbesondere Gehäusefüße (43), Saugstutzen (8), Druckstutzen (10) und Verbindungsstellen (44), an welche weitere Bauteile der Pumpenanordnung (1) befestigbar sind.

3. Pumpenanordnung (1) nach einem der Ansprüche 1 oder 2, **dadurch gekennzeichnet, dass** freie Enden (46) der Stützstruktur (41) zur Aufnahme von geeigneten Befestigungsmitteln, insbesondere Schrauben oder Gewindebolzen, Sacklöcher (47) aufweisen.

4. Pumpenanordnung (1) nach einem der Ansprüche 1 bis 3, **dadurch gekennzeichnet, dass** sich die Temperierkammer (29) zwischen Innenwandung (27) und Außenwandung (28) und im Wesentlichen über den die Strömungskammer (16) begrenzenden Teil der Innenwandung (27) erstreckt.

5. Pumpenanordnung (1) nach einem der Ansprüche 1 bis 4, **dadurch gekennzeichnet, dass** in der Temperierkammer (29) wenigstens ein im Wesentlichen konzentrisch zur Drehachse (A) angeordneter kreisartiger Kanal (32) ausgebildet ist.

6. Pumpenanordnung (1) nach einem der Ansprüche 1 bis 5, **dadurch gekennzeichnet, dass** in der Temperierkammer (29) eine Vielzahl von Streben (31) vorgesehen sind, welche die Innenwandung (27) mit der Außenwandung (28) verbinden und im Wesentlichen konzentrisch zur Drehachse (A) angeordnete kreisartig verlaufende Kanäle (32) bilden.

7. Pumpenanordnung (1) nach einem der Ansprüche 1 bis 6, **dadurch gekennzeichnet, dass** in der Temperierkammer (29) eine erste Sammelkammer (34) und eine zweite Sammelkammer (35) ausgebildet sind, in welche die Kanäle (32) enden, und die beginnend von einem Bereich nahe des Saugstutzens (8) eine im Wesentlichen radiale Ausdehnung aufweisen.

8. Pumpenanordnung (1) nach einem der Ansprüche 1 bis 7, **dadurch gekennzeichnet, dass** in einem sich radial erstreckenden Bereich, der unterhalb des Saugstutzens (8) liegt, eine dritte Sammelkammer (36) ausgebildet ist, in welche die Kanäle (32) enden.

9. Pumpenanordnung (1) nach einem der Ansprüche 1 bis 8, **dadurch gekennzeichnet, dass** das Hydraulikgehäuse (3) eine mit der dritten Sammelkammer (36) verbundene dritte Anschlussvorrichtung (39) aufweist, die für die vollständige Entleerung der Temperierkammer (29) vorgesehen ist.

10. Pumpenanordnung (1) nach einem der Ansprüche 1 bis 9, **dadurch gekennzeichnet, dass** der Kanal (32) bzw. die Kanäle (32) eine definierte Strukturierung aufweisen, die zur Maximierung von Turbulenzen in dem Kühl- oder Heizmedium und somit zur Maximierung des Wärmeaustauschs dient.

11. Verfahren zur Herstellung eines Hydraulikgehäuses (3) für eine Pumpenanordnung (1) nach einem der vorhergehenden Ansprüche, als einstückiges Bauteil mittels 3D-Drucks, insbesondere metallischen 3D-Drucks, Selektiven Laser-Schmelzens (SLM), oder mittels Feingusses oder Schwerkraftgießens.

## Claims

1. Pump arrangement (1), in particular a centrifugal pump arrangement, having
a hydraulic casing (3),
a suction pipe (8) which is formed on the hydraulic casing (3),
a pressure pipe (10) which is formed on the hydraulic casing (3),
a flow chamber (16) which is defined at least partially by the hydraulic casing (3),
and an impeller (18) which is arranged in the flow chamber (16) and can be driven about an axis of rotation (A) via an impeller shaft (15),
wherein
the hydraulic casing (3) has an inner wall (27) defining the flow chamber (16), and an outer wall (28) which is at a distance from the inner wall (27), the inner wall (27) and outer wall (28) forming a temperature-control chamber (29),
a first connecting device (37) is provided, by means of which a cooling or heating medium can flow into the temperature-control chamber (29) in order to control the temperature of the hydraulic casing (3),
a second connecting device (38) is provided, by means of which the cooling or heating medium can flow back out of the temperature-control chamber (29),
the hydraulic casing (3) has a support structure (41) on the outer side of the outer wall (28),
the support structure (41) comprises substantially horizontally, vertically and diagonally extending elongate accumulations of material,
**characterized**
**in that** the elongate accumulations of material form interconnection or intersection points (45), and
**in that** the first connecting device is provided on the pressure pipe (10).

2. Pump arrangement (1) according to Claim 1, **characterized in that** the support structure (41) interconnects defined construction elements of the hydraulic casing (3), in particular casing feet (43), suction pipes (8), pressure pipes (10) and connection points (44), to which additional components of the pump arrangement (1) can be fixed.

3. Pump arrangement (1) according to either of Claims 1 and 2, **characterized in that** free ends (46) of the support structure (41) comprise blind holes (47) for receiving suitable fixing means, in particular screws or threaded bolts.

4. Pump arrangement (1) according to any of Claims 1 to 3, **characterized in that** the temperature-control chamber (29) extends between the inner wall (27) and outer wall (28) and substantially over the part of the inner wall (27) defining the flow chamber (16).

5. Pump arrangement (1) according to any of Claims 1 to 4, **characterized in that**, in the temperature-control chamber (29), there is at least one circular channel (32) arranged substantially concentrically with the axis of rotation (A).

6. Pump arrangement (1) according to any of Claims 1 to 5, **characterized in that**, in the temperature-control chamber (29), a plurality of struts (31) are provided which connect the inner wall (27) to the outer wall (28) and form channels (32) extending in a circular shape arranged substantially concentrically with the axis of rotation (A).

7. Pump arrangement (1) according to any of Claims 1 to 6, **characterized in that**, in the temperature-control chamber (29), a first collection chamber (34) and a second collection chamber (35) are formed in which the channels (32) end and which, starting from a region close to the suction pipe (8), comprise a substantially radial extension.

8. Pump arrangement (1) according to any of Claims 1 to 7, **characterized in that** there is a third collection chamber (36), in which the channels (32) end, in a radially extending region which lies below the suction pipe (8).

9. Pump arrangement (1) according to any of Claims 1 to 8, **characterized in that** the hydraulic casing (3) comprises a third connecting device (39) which is connected to the third collection chamber (36) and is provided to completely empty the temperature-control chamber (29).

10. Pump arrangement (1) according to any of Claims 1 to 9, **characterized in that** the channel (32) or channels (32) comprise a defined structure which is used to maximize turbulence in the cooling or heating medium and thus to maximize the heat exchange.

11. Method for producing a hydraulic casing (3) for a pump arrangement (1) according to any of the preceding claims, as an integral component by means of 3D-printing, in particular metal 3D-printing, selective laser melting (SLM) or by means of precision casting or gravity casting.

## Revendications

1. Ensemble pompe (1), en particulier ensemble pompe centrifuge, comportant
un carter hydraulique (3),
une tubulure d'aspiration (8) réalisée sur le carter hydraulique (3),
une tubulure de pression (10) réalisée sur le carter hydraulique (3),
une chambre d'écoulement (16) délimitée au moins partiellement par le carter hydraulique (3),
une roue mobile (18) disposée dans la chambre d'écoulement (16), pouvant être entraînée autour d'un axe de rotation (A) par le biais d'un arbre de roue mobile (15),
dans lequel
le carter hydraulique (3) présente une paroi intérieure (27) délimitant la chambre d'écoulement (16) et une paroi extérieure (28) espacée de la paroi intérieure (27), dans lequel la paroi intérieure (27) et la paroi extérieure (28) forment une chambre de thermorégulation (29),
un premier dispositif de raccordement (37) est prévu, par le biais duquel un milieu de refroidissement ou de chauffage peut s'écouler dans la chambre de thermorégulation (29) pour la thermorégulation du carter hydraulique (3),
un deuxième dispositif de raccordement (38) est prévu, par le biais duquel le milieu de refroidissement ou de chauffage peut à nouveau s'écouler hors de la chambre de thermorégulation (29),
le carter hydraulique (3) présente, sur le côté extérieur de la paroi extérieure (28), une structure de support (41) et
la structure de support (41) présente des accumulations de matière allongées s'étendant sensiblement horizontalement, verticalement et en diagonale,
**caractérisé**
**en ce que** les accumulations de matière allongées forment des points d'intersection ou de croisement (45), et
**en ce que** le premier dispositif de raccordement est prévu au niveau de la tubulure de pression (10).

2. Ensemble pompe (1) selon la revendication 1, **caractérisé en ce que** la structure de support (41) relie des éléments structuraux définis du carter hydraulique (3) les uns aux autres, en particulier des pieds de carter (43), des tubulures d'aspiration (8), des tubulures de pression (10) et des points de liaison (44), auxquels d'autres parties structurales de l'ensemble pompe (1) peuvent être fixées.

3. Ensemble pompe (1) selon l'une des revendications 1 ou 2, **caractérisé en ce que** des extrémités libres (46) de la structure de support (41) présentent des trous borgnes (47) pour la réception de moyens de fixation appropriés, en particulier de vis ou de boulons filetés.

4. Ensemble pompe (1) selon l'une des revendications 1 à 3, **caractérisé en ce que** la chambre de thermorégulation (29) s'étend entre la paroi intérieure (27) et la paroi extérieure (28) et sensiblement sur la partie de la paroi intérieure (27) délimitant la chambre d'écoulement (16).

5. Ensemble pompe (1) selon l'une des revendications 1 à 4, **caractérisé en ce qu'**au moins un canal circulaire (32) disposé sensiblement concentriquement à l'axe de rotation (A) est réalisé dans la chambre de thermorégulation (29).

6. Ensemble pompe (1) selon l'une des revendications 1 à 5, **caractérisé en ce qu'**une pluralité de supports (31) sont prévus dans la chambre de thermorégulation (29), lesquels relient la paroi intérieure (27) à la paroi extérieure (28) et forment des canaux (32) s'étendant de manière circulaire, disposés sensiblement concentriquement à l'axe de rotation (A).

7. Ensemble pompe (1) selon l'une des revendications 1 à 6, **caractérisé en ce qu'**une première chambre de collecte (34) et une deuxième chambre de collecte (35) sont réalisées dans la chambre de thermorégulation (29), dans lesquelles les canaux (32) se terminent, et lesquelles présentent une étendue sensiblement radiale à partir d'une région proche de la tubulure d'aspiration (8) .

8. Ensemble pompe (1) selon l'une des revendications 1 à 7, **caractérisé en ce que**, dans une région s'étendant radialement qui se situe en dessous de la tubulure d'aspiration (8), une troisième chambre de collecte (36) est réalisée, dans laquelle les canaux (32) se terminent.

9. Ensemble pompe (1) selon l'une des revendications 1 à 8, **caractérisé en ce que** le carter hydraulique (3) présente un troisième dispositif de raccordement (39) relié à la troisième chambre de collecte (36), lequel est prévu pour la vidange complète de la chambre de thermorégulation (29).

10. Ensemble pompe (1) selon l'une des revendications 1 à 9, **caractérisé en ce que** le canal (32) ou les canaux (32) présentent une structuration définie qui sert à maximiser des turbulences dans le milieu de refroidissement ou de chauffage et donc à maximiser l'échange de chaleur.

11. Procédé de fabrication d'un carter hydraulique (3) pour un ensemble pompe (1) selon l'une des revendications précédentes, en tant que partie structurale d'une seule pièce par impression 3D, en particulier impression 3D métallique, fusion sélective par laser (SLM), ou par coulage de précision ou coulage par gravité.
